# EUROPEAN PATENT SPECIFICATION

(11) **EP 4 016 492 B1**
(45) Date of publication and mention of the grant of the patent: **30.04.2025**
(21) Application number: 20215714.5
(22) Date of filing: 18.12.2020
(51) Int. Cl.: G08C 19/28, A63H 30/04

(54) **SYSTEM AND METHOD FOR REMOTE CONTROLLED OBJECTS**
SYSTEM UND VERFAHREN ZUR FERNSTEUERUNG VON OBJEKTEN
SYSTÈME ET PROCÉDÉ POUR OBJETS TÉLÉCOMMANDÉS

(43) Date of publication of application: 22.06.2022
(73) Proprietor: Augmented Robotics UG, 10625 Berlin (DE)
(72) Inventor: NITSCHKE, Tony, 13627 Berlin (DE); MELAN, Evgeni, 10627 Berlin (DE); BETHKE, Patrick Finn Albrecht, 12247 Berlin (DE)
(74) Representative: Vossius & Partner Patentanwälte Rechtsanwälte mbB

(56) References cited:
- WO-A1-2014/189757
- US-A1- 2007 271 267
- US-A1- 2009 237 287
- US-A1- 2016 073 151
- US-A1- 2017 024 999

## Description

The invention relates to the field of electronics, in particular to a system and method for remote controlled objects.

Remote controlled objects, RCOs, are used in many different fields of application. Examples of such remote controlled objects are drones, robots, and radio controlled, RC, toys. Examples of applications are drone based surveillance, remote controlled rescue robots, or simply entertainment with RC toys.

US 2017/024999 A1 relates to a system and method for configuring a remote control to command the operation of appliances, to capture demographic data, and to provide services, such as automated warranty registration, instructions, viewing guides, etc., relevant to the appliances is provided. The system includes a database and associated server that are located remotely from the remote control and accessible via a network connection.

US 2007/271267 A1 relates to data indicative of physical characteristics of an object of interest being received at a recognition system having an associated database in which is stored physical characteristic data for a plurality of reference objects each of which is cross-referenced to configuration information for a universal controlling device. The reference system uses the received data and the physical characteristic data for the plurality of reference objects to discern one or more reference objects as being a match for the object of interest. At least a subset of the configuration information that has been cross-referenced to the one or more reference objects discerned by the recognition system as being a match for the object of interest is then used to configure the universal controlling device to enable the universal controlling device to communicate commands to one or more target appliances.

Typically, the movement of a remote controlled object is controlled via a user input of a drive command into a controller unit. In the controller unit the drive command is transformed into a remote control signal which is then transmitted, preferably wirelessly, to the RCO. At the RCO the control signal is received in a receiver unit and is transformed into one or more signals for one or more actuating means of the RCO, which cause the RCO to react in a certain way according to the remote control signal.

However, the remote control signals are not standardized. A controller unit must typically match the receiver unit. Furthermore, the remote control signals are often encoded and/or use different physical transmission channels or methods. Thus, it is virtually impossible to integrate different RCOs of different manufacturers into a system or to replace an original controller in case of loss or malfunction.

Thus, a universal remote control is required. In case an original controller unit is lost or broken, a universal remote control allows the user to control the RCO again. In particular, with a universal remote control the user is able to use legacy RCOs such as old toys, where replacement controller units are no longer produced. Furthermore, a universal remote control allows for abovementioned integration of an RCO into a complex gaming environment and thus the user experience is improved.

Different RCOs may use different remote control commands. The differences relate to the frequency channel, the structure of the signal and the type of modulation. Thus, it is an object of the invention to identify the correct RC command for an RCO.

The remote control commands may be based on digital or analog remote control signals. In general, the exact structure of the remote control signals is not known for an unknown RCO. Thus, it is an object of the invention to determine the structure of the remote control signals for an unknown RCO based on an automated technical process.

The above objects are achieved by the subject-matter of the independent claims. The dependent claims relate to further aspects of the invention.

According to an aspect of the invention there is provided a system for controlling a movement of a remote controllable self-propelled object, RCO, comprising a database configured to maintain remote control information regarding at least one RCO, wherein the remote control information comprises at least one remote control command of the RCO; a remote control signal sending unit configured to send at least one remote control signal comprised in the remote control command to at least one RCO via a remote control interface; a first controller operationally connected to the database. The first controller is configured to retrieve the remote control information for an RCO from the database; and is configured to send remote control information via a first communication interface to a second controller. The second controller is operationally connected to the remote control sending unit; and is configured to receive the remote control information from the first controller via the first communication interface; and is configured to send at least one remote control signal based on the remote control information to the RCO via the remote control interface.

According to the invention, the system further comprises an identification means configured to identify at least one RCO and an action verification means configured to detect an action of the RCO. The first controller is operationally connected to the identification means and the second controller is operationally connected to the action verification means;
wherein in an initialization phase the first controller is configured
a) to identify at least one candidate RCO via the identification means;
b) to retrieve the remote control information for the candidate RCO from the database,
c) to send the candidate remote control information or at least one candidate remote control command comprised therein to the second controller, and
   wherein in the initialization phase the second controller is configured
d) to send at least one remote control signal based on the candidate remote control command to the RCO via the remote control sending unit.
e) to verify an action of the RCO in response to the candidate remote control command via the action verification means, and
f) preferably to send information regarding a verified action to the first controller, wherein the action verification means is an inertial measurement unit or a camera of a smart device configured to detect a change of position of the RCO.

In an embodiment of the invention, in the initialization phase in a heuristic search the second controller is configured to subsequently send all possible remote control signals to the RCO via the remote control sending unit and further configured to verifying an action of the RCO via the action verification means, and preferably to send information regarding a verified action to the first controller.

In an embodiment of the invention, the system further comprises a machine leaming system connected to the database and to the first controller, wherein the machine learning system is configured to maintain a trained model for identification of candidate RCOs.

In an embodiment of the invention, in an operational phase the first controller is configured
a) to receive a drive command input from a user;
b1) to determine one or more remote control commands corresponding to the drive command and to send the remote control commands to the second controller, or
b2) to send the drive command to the second controller and the second controller is configured to one or more remote control commands corresponding to the drive command; and
wherein in the operational phase the second controller is configured
c) to send at least one remote control signal corresponding to the remote control command to the RCO via the remote control sending unit.

In an embodiment of the invention, the system further comprises a first unit comprising the first controller unit and preferably comprising the identification means; and a second unit comprising the remote control signal sending unit and preferably comprising the action verification means. The first unit and the second unit are connected via the first communication interface and the first communication interface is a standardized communication interface.

In an embodiment of the invention, the first unit is provided at or integrated in a user device, preferably a smart user device and/or wherein the second unit is suitable to be provided at or to be integrated in the remote controllable object.

In an embodiment of the invention, the remote control signal is a radio control signal; and/or wherein the standardized communication interface is a WiFi connection or a Bluetooth connection.

In an embodiment of the invention, the remote controllable object identification means is a camera, preferably an integrated camera of the user device.

In an embodiment of the invention, the system is further comprising a first unit comprising the first controller unit, the identification means; and the action verification means; and a second unit comprising the remote control signal sending unit. The identification means and the action verification means use images of a camera. Preferably the first unit is formed in a user device, preferably a smart user device, and the camera is a single camera of the smart device. The first unit and the second unit are connected via the first communication interface and the first communication interface is a standardized communication interface.

According to an aspect of the invention there is provided a method for use of a system for controlling a remote controllable object according to any one of the preceding aspects and embodiments, comprising the steps of: at the first controller retrieving the remote control information for an RCO from the database; and sending remote control information via a first communication interface to the second controller; and at the second controller receiving the remote control information from the first controller via the first communication interface; and sending at least one remote control signal based on the remote control information to the RCO via the remote control interface.

According to the invention, the method further comprises in an initialization phase the steps of: at the first controller
a) identifying at least one candidate RCO via the identification means;
b) retrieving the remote control information for the candidate RCO from the database,
c) sending the candidate remote control information or at least one candidate remote control command comprised therein to the second controller, and
   in the initialization phase at the second controller
d) sending at least one remote control signal based on the candidate remote control command to the RCO via the remote control sending unit.
e) verifying an action of the RCO in response to the candidate remote control command via the action verification means, and
f) preferably sending information regarding a verified action to the first controller, wherein the action verification means is an inertial measurement unit or a camera of a smart device configured to detect a change of position of the RCO.

In an embodiment of the invention, the method further comprises the steps of: in an operational phase at the first controller
a) receiving a drive command input from a user;
b1) determining one or more remote control commands corresponding to the drive command and to send the remote control commands to the second controller, or
b2) sending the drive command to the second controller and the second controller is configured to one or more remote control commands corresponding to the drive command; and
   in the operational phase at the second controller
c) to sending at least one remote control signal corresponding to the remote control command to the RCO via the remote control sending unit.

According to an aspect of the invention there is provided a computer program product comprising instructions to cause a first controller to execute the steps of the method of any one of the preceding aspects and embodiments and/or to cause a second controller to execute the steps of the method of any one of the preceding aspects and embodiments.

According to an aspect of the invention there is provided a computer-readable medium having stored thereon the computer program of the preceding aspect.

Hereinafter, the invention is explained in terms of RC toys. However, it is clear to the skilled person that this is merely a preferred embodiment of the invention and is not limiting the scope of the invention. In particular, further embodiments of the invention relate to the above detailed further examples of RCOs and their respective applications.

It is a general aspect of the invention that an electronics module, hereinafter also referred to a second controller, according to the invention is attached to an RCO and said module communicates with the RCO via a remote control interface. The user inputs drive commands to a user controller. The user controller sends one or more corresponding remote control commands to the module via a first communication interface. The user controller is preferably a smart device, such as a smart phone or tablet, and the first communication interface is preferably a standardized interface, preferably based on a wireless network protocol, e.g. WiFi or using short-wavelength UHF radio waves in the industrial, scientific and medical radio bands, from 2.402 GHz to 2.480 GHz, e.g. Bluetooth. That is, preferably using the IEEE 802.11 family of standards or the IEEE 802.15.1 standard. Hereinafter the terms WiFi and Bluetooth are used.

It is a further general aspect of the invention that the electronics module according to the invention is preferably configured to be attached to an RCO and is further equipped with an independent energy source such as a lithium polymer battery. Alternatively, the electronics module may be connected to the energy source of the RCO. The electronics module is attached to or inserted in the RCO, preferably by suitable attachment means, such as Velcro tape, removable adhesive, permanent adhesive, magnets or screws.

It is a further general aspect of the invention to provide a universal smart phone based control for radio controlled toys. The control is based on a device, hereinafter also referred to as second unit, attached to the RC toy. The device preferably comprises an own energy sub system, preferably a lithium polymer battery. The user uses a smart phone to connect to the device via a standardized communication interface and inputs the drive commands to the smart phone.

The device is configured to forward the drive commands as a remote control signal, preferably on an RC compatible frequency, to the RC toy. This allows the user to control the RC toy via an input to the smart phone.

It is a further general aspect of the invention that the RC toy is photographed by the user with his smart device. On the smart device a system, comprising a trained machine leaming system, preferably a neural network, for picture classification, is operated. This system, preferably the network, attempts to identify the RC toy and provides from a database the most likely candidates and the corresponding remote control information. Hereinafter, the term machine leaming system encompasses the term neural network.

### Brief Description of the Drawings

The above-described objects, advantages and features of the present invention, as well as others, will be more readily understood from the following detailed description of certain preferred embodiments of the invention, when considered in conjunction with the accompanying drawings in which:
- Fig. 1: shows a method and system according to an embodiment of the invention;
- Fig. 2: shows a method and system according to an embodiment of the invention;
- Fig. 3: shows a method and system according to an embodiment of the invention based on a heuristic approach;
- Fig. 4: shows a flow chart of a method according to embodiments of the invention. Fig. 4 is split into three subfigures Fig. 4a, Fig. 4b and Fig. 4c for improved intelligibility;
- Fig. 5: shows a block diagram of a second controller according to an embodiment of the invention; and
- Fig. 6: shows a control method according to an embodiment of the invention.

### Detailed description of the drawings

In the following, embodiments of the invention will be described. It is noted that some aspects of every described embodiment may also be found in some other embodiments unless otherwise stated or obvious to the skilled person. However, for increased intelligibility, each aspect will only be described in detail when first mentioned and any repeated description of the same aspect will be omitted.

Throughout this description different signals are transmitted and received. While all used terms are to be interpreted by the skilled person based on their ordinary meaning, the following terms are used based on the following definitions:
i) The term remote control information; A database according to the invention maintains remote control information regarding a remote controlled object. A first controller retrieves the remote control information from the database.
ii) The term maintain information in a database; The term encompasses all steps of data processing with regard to a database, i.e. sending information to a database, receiving information from a database, updating information in a database, deleting information in a database and such.
iii) The term remote control command; The remote control information of an RCO comprises one or more remote control commands for the RCO, e.g. a forward command, a reverse command, a left command, a right command. Preferably, the one or more remote control commands are transmitted from the first unit to the second unit via the standardized interface.
iv) The term drive command; The user inputs a drive command into the first unit. In an embodiment of the invention the first unit determines one or more remote control commands corresponding to the drive command inputted by the user and transmits the remote control command to the second unit. In an alternative embodiment of the invention the drive command as inputted by the user is transmitted to the second unit and the second unit determines a corresponding remote control command.
v) The term remote control signal; The remote control command comprises at least one remote control signal. The remote control signal sending unit sends said remote control signal corresponding to the remote control command to the RCO, preferably the remote control signal is a radio signal. Preferably, the remote control command further comprises information regarding the remote control signal, such as frequency band and modulation type.
vi) The term remote control sequence; A remote control signal may be an analog or digital signal. In case of a digital signal the remote control signal preferably comprises a remote control sequence. That is, a sequence of digital control signals forming the remote control signal.
vii) The term list of candidate remote control signals; For an unknown RCO identification, a machine leaming system, preferably a neural network, generates a list of candidate RCOs. Accordingly, one or more candidate remote control information is retrieved. Based on said candidate remote control information of the candidate RCOs the first unit determines a list of candidate remote control commands and/or a list of candidate remote control signals.
viii) The term match; In the initialization phase, in case a candidate remote control signal matches a remote control signal of the RCO, the RCO performs a movement. The movement is detected by an inertial measurement unit, IMU. The matching remote control signal is defined as a match. Preferably the match is reported to the database via the first unit. Furthermore, the match will be used to update the trained model of the machine leaming system, preferably the neural network, for identifying the RCO.
ix) The term heuristic-match; In the initialization phase, in case no matches are found a heuristic mode is employed. In the heuristic mode all possible remote control signals are sequentially checked by trial and error. In case the tried remote control signal is a remote control signal of the RCO a movement is detected. This hit is defined as a heuristic-match. Preferably the heuristic-match is reported to the database via the first unit. Furthermore, the heuristic-match will be used to update the trained model of the machine leaming system, preferably the neural network, for identifying the RCO.

In a preferred embodiment of the invention, a smart device is used. The term smart device encompasses different user equipment devices. Preferred embodiments relate to smart devices such as a smart phone, a tablet device or a laptop computer. A smart device typically provides at least one input means, flexible computing means, memory means, and different communication means.

In a preferred embodiment, the first unit, i.e. the first controller and the identification means are provided at or in a smart device. This term "provided at" encompasses physically integrated into the electronics of the device and/or implemented as software on the hardware platform of the smart device. In particular, according to the invention, the input means of the smart device are used for inputting the user's drive commands; a camera device of the smart device is used as part of the identification means; a network connectivity function of the smart device is used to connect to the database, and a first communication interface of the smart device is used to connect to the second unit according to the invention.

The type of communication interface between the smart device and the second unit is preferably a standardized communication interface. In preferred embodiments, an interface is used which is supported by most smart devices, most preferably one of: WiFi, Bluetooth, ZigBee, IR, LoRaWAN, UMTS, LTE, or 5G interface is used.

In an embodiment of the invention, the user captures a picture of the RCO with the camera of a smart device. On the smart device a trained machine leaming system, preferably a neural network, for picture classification operates as identification means. This network attempts to identify the RCO; preferably the network determines the make and/or model of the RCO. Based on the identification results the remote control information for the most likely RCO candidates are retrieved from the database.

In an embodiment of the invention, a list of candidate remote control commands is generated based on the retrieved candidate remote control information. According to the invention, in an initialization phase, one or more remote control commands need to be verified for the specific RCO.

That is, from the list of candidate remote control commands, a specific remote control command has to be isolated and verified. To this end the list of candidate remote control commands is sent from the first unit, preferably the smart device, to the second unit, preferably via WiFi and/or Bluetooth. The second unit determines one or more corresponding candidate remote control signals for each candidate remote control command. The second unit subsequently sends each of the candidate remote control signals via the remote control signal sending unit to the RCO.

In case a candidate remote control signal matches a remote control signal of the RCO, the RCO interprets the remote control signal and performs a corresponding action. In an embodiment of the invention, the second unit comprises an inertial measurement unit, IMU, which detects an acceleration direction and/or an orientation of the RCO. Based on the information obtained from the IMU, the second controller derives the type of movement, preferably one of forward, reverse, left, and right movement. The type of movement is then automatically associated to the remote control command and referred to as a match.

In other words, according to the invention, a specific remote control signal is identified and verified based on a detection of matches with the IMU.

In a preferred embodiment, the identified and verified remote control signals are sent from the second unit to the first unit, preferably the smart device. The matches are submitted to the database and used to optimize the identification means, preferably to further train the machine learning system, preferably the neural network.

In an embodiment of the invention, in case no matches are found in the list of candidate remote control signals, the second unit switches to a heuristic mode. In the heuristic mode the second unit tries all remote control signals and preferably any possible combination thereof.

In case of an RC toy, preferably the frequency range from 27 to 40 MHz is used. Alternatively, or additionally, other known RC frequencies or bands at/around 35, 36, 49, 72, and 75 MHz may be used. In this range mostly amplitude modulation is used. At 27 und 40 MHz amplitude modulation, preferably on-off keying is used. This allows finding a first heuristic-match within a brief time. When a heuristic-match is found, the RC model receives a remote control signal and performs a corresponding movement. As described above the second unit detects the acceleration and determines the type of movement. The type of movement is then automatically associated with the remote control command. A first remote control command has been identified. Preferably, this is repeated until all basic movement types have been identified.

In a preferred embodiment of the invention, the obtained heuristic-matches for the movement types form a new remote control information which is submitted from the smart device to the database. The remote control information is then used to improve the identification means.

It is a general concept of the invention to provide a universal smart phone based control for radio controlled toys. The control is based on a device attached to the RC toy. The module preferably comprises an own energy sub system, preferably a lithium polymer battery. The user uses a smart phone to connect to the device via a standardized communication interface and inputs the drive commands to the smart phone.

The device is configured to forward the drive command as a remote control signal, preferably on an RC compatible frequency, to the RC toy. This allows the user to control the RC toy via an input to the smart phone.

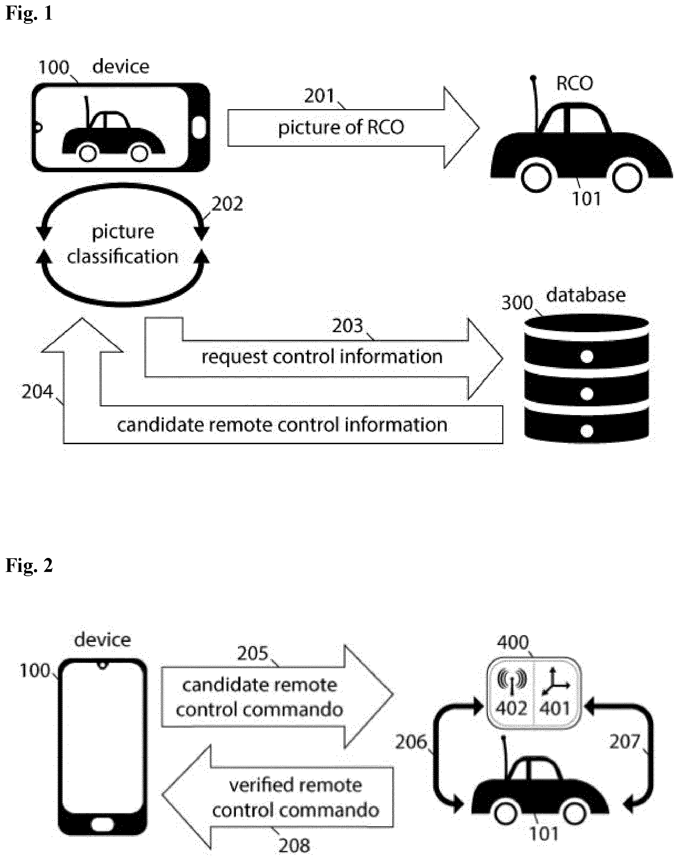

Fig. 1 shows a method and system according to an embodiment of the invention. In a first step 201, a picture of the RCO 101 is taken with the camera of a smart device 100. On the smart device a picture classification 202 is performed. Alternatively, or additionally, the picture classification is performed at least in part on an external server, wherein the smart device and the external server are connected via a communication interface of the smart device. Based on the classification result one or more requests for remote control information 203 are sent to a database 300. The database 300 may be provided on the smart device. However, a central database 300 on an external server is preferred. Based on the request at least one candidate remote control information 204 is returned to the smart device 100.

Fig. 2 shows a method and system according to an embodiment of the invention. As described above, at least one candidate RCO is determined by a trained model of a machine learning system.

Accordingly, the first unit 100, preferably on the smart device 100, retrieves one or more candidate remote control information from the database 300.

In an embodiment of the invention, the first controller determines a list of candidate remote control commands and sends said list 205 to a second controller 400. The second controller comprises a remote control sending unit 402 and an inertial measurement unit 401. The second controller 400 subsequently processes the candidate control commands. Based on a candidate control command the remote control sending unit 402 is configured. That is, the transmission parameters are set. Said parameters may comprise one or more of channel information, baud rate, frequency, pulse rate, modulation, frequency spread method, and bit information. Then a remote control signal 206 based on the candidate remote control command is sent to the RCO 101.

In case the remote control signal is known by the RCO 101, the RCO 101 will interpret the signal and perform an action 207. In an embodiment of the invention a movement 207 is performed. The IMU 401 detects the movement 207. The second controller 400 processes the detected movement 207 and sends a verified remote control command 208 to the first unit 100.

In an alternative embodiment, in the first unit a list of candidate remote control signals is determined based on the list of candidate remote control commands. Said list of candidate remote control signals is then sent to the second unit. This reduces the computational effort on the second unit. Accordingly, the remaining steps of the process are adapted, i.e. the remote control signals are handled at the first controller and all steps processing said signals will also be performed by the second controller.

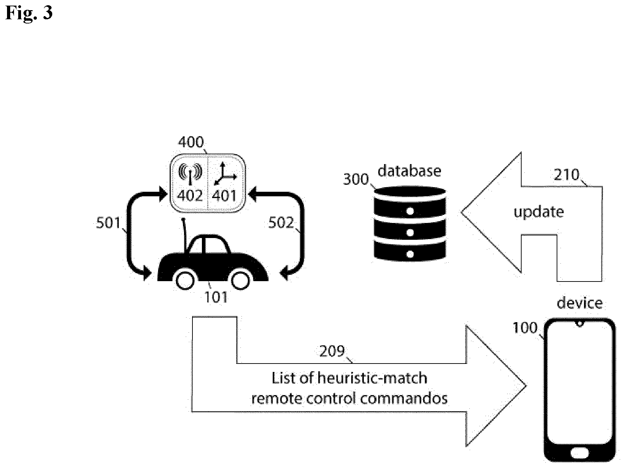

Fig. 3 method and system according to an embodiment of the invention. In addition, or as an alternative to the above described machine leaming approach, the system may perform a heuristic search for remote control commands.

The second controller 400 systematically tests 501 all possible remote control signals. That is, all different configurations of the remote sending unit and all known remote control signals are tested 501. In case the remote control signal is known by the RCO 101, the RCO 101 will interpret the signal and perform an action 502. In an embodiment of the invention, a movement 502 is performed. The IMU 401 detects the movement 502. The second unit 400 processes the detected movement 502 and sends a verified remote control command 209 to the first unit 100. The first unit 100 updates 210 the database 300 accordingly.

In a preferred embodiment of the invention, a complete set of verified remote control commands is sent to the first unit after the heuristic search has been completed. Additionally, or alternatively, a termination criterion may be defined, which causes the heuristic search to be stopped and the verified remote control command to be send to the first unit. Such a criterion may be a preset time or a predetermined number of verified remote control commands.

In a preferred embodiment, the machine leaming and the heuristic approach complement each other. That is, when the identification of the RCO has failed and/or no matches were found, i.e. no remote control command could be verified, and the heuristic approach is used. Additionally, after a heuristic-match has been found the results are used to update the database 300 and to improve the identification means. Preferably, the trained model of the machine learning system, preferably the neural network, for picture classification 202 is optimized based on the heuristic-matches. When a central database 300 is used, the heuristic search has to be only performed once for an unknown RCO. The second time the RCO is already known, however, it may not be recognized by the machine learning system, preferably the neural network, e.g. because of a different color or a customized exterior. However, after a few more initializations of basically the same RCO, the machine leaming system, preferably the neural network, is able to identify the RCO and the corresponding remote control information in the database 300.

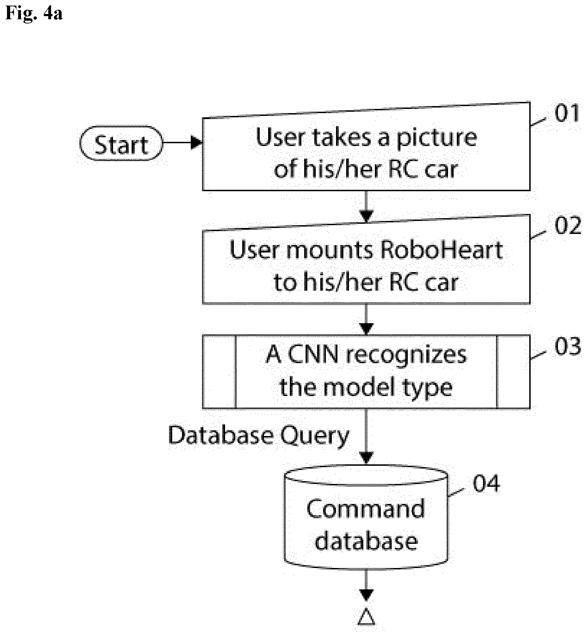

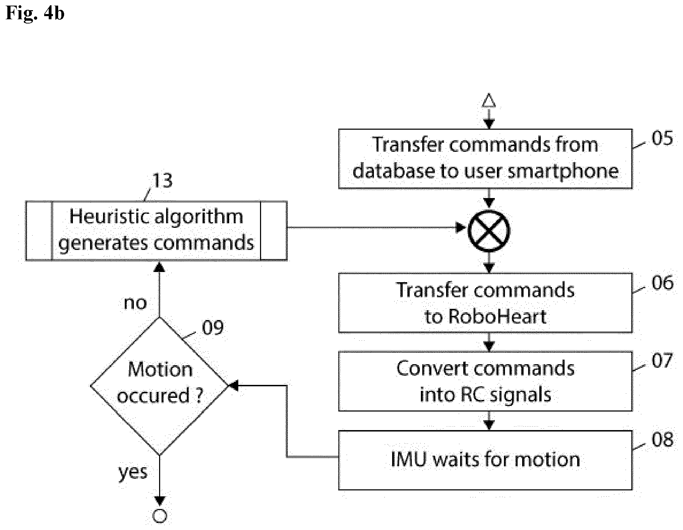

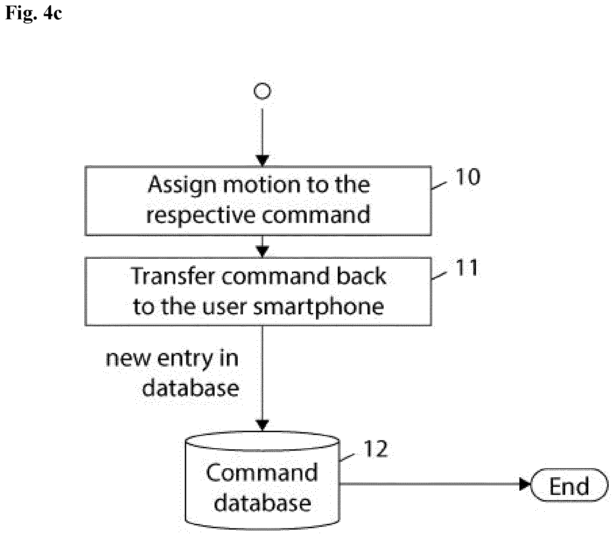

Fig. 4 shows a flow chart of a method according to embodiments of the invention. Fig. 4 is split into three subfigures Fig. 4a, Fig. 4b and Fig. 4c for improved intelligibility. The content of said subfigures is understood to be connected at the delta-mark and the circle-mark, respectively.

In step 01: a user takes a photograph of a radio-controlled vehicle 101 with his/her smart device 100. Next, the user mounts the second unit 400 onto the vehicle 101 in step 02, preferably in the vicinity of the vehicle's receiver antenna. The photo from step 01 is processed by a neural image classification network 202 in step 03. This network 202 attempts to classify the radio-controlled vehicle type and returns the most probable type results.

In a following database query step 04 remote control information is accessed from the database 300 and is loaded onto the user's smart device in step 05. The remote control information and/or the remote control commands comprised therein are transmitted to the module through a standardized interface such as WiFi or Bluetooth in step 06. From the remote control commands the module 400 generates a remote control signal, preferably a radio signal, in step 07. The appropriate channel, modulation, and frequency spread method is set according to the remote control command.

The module 400 comprises an integrated IMU 401, which is activated in step 08 and waits for an occurring motion on system level, i.e. of the module 400 and the vehicle 101. In Step 09, the IMU 401 preferably returns one of the following results: a motion was recorded, or no motion was recorded. As soon as a motion is recorded the IMU 401 analyzes the type of motion. A distinction is made between eight basic motion types: forward, reverse, left, right, forward left, forward right, reverse left, and reverse right. The remote control command which was sent to the vehicle is automatically associated to the respective motion which was triggered by the command in step 10.

If no motion is detected by the IMU 401, then a heuristic algorithm starts which generates new remote control commands in conventional frequency channels and modulation types in step 13. Each generated command goes through the steps 06, 07, 08 and 09 until a motion is detected. The matched commands are transmitted back to the smart device 100 via a standardized radio interface such as WiFi or Bluetooth in step 11.

The commands are matched to the photograph made in step 01 and the neural image classification network is enhanced by the new dataset. The new radio commands, which are matched to the RCO 101, are stored in the database 300 in step 12.

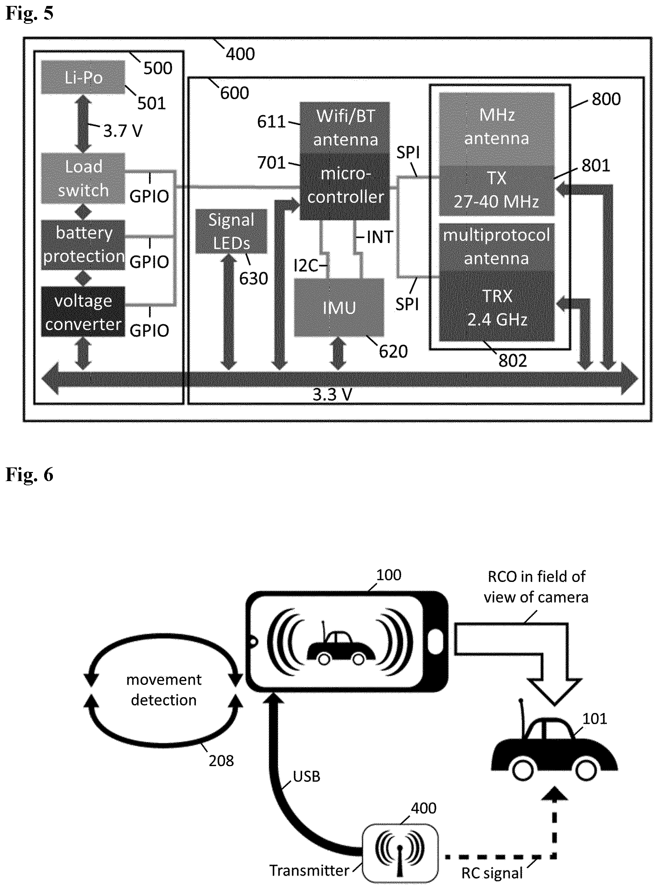

Fig. 5 shows a block diagram of the second controller 400 according to an embodiment of the invention. The second controller comprised in a device configured to be attached to the RCO. The second controller 400 comprises an energy-subsystem 500 and a main electronics unit 600. In an embodiment of the invention the energy-subsystem 500 comprises a battery 501, preferably a lithium-polymer-battery. Additionally or alternatively the second controller may be coupled to the RCO to be supplied with power from the RCO.

In an embodiment of the invention, the energy subsystem comprises a load switch connected to a battery protection unit connected to a voltage converter unit. The energy sub-system is configured to reliably provide an even voltage to the subsequent main electronics 600, preferably via a bus, more preferably via a 3.3 Volt bus.

In an embodiment of the invention, the main electronics module 600 comprises a central processing unit 701, preferably a microcontroller. The central processing unit is preferably connected to a Wifi and/or Bluetooth antenna 611, preferably the antenna 611 is integrated in the same microcontroller.

The central processing unit 701 communicates with an IMU 620, preferably communicates via a serial interface, more preferably a I2C interface, with the IMU 620. The IMU 620 is configured to detect motion of the RCO to which the second controller is attached.

In an embodiment of the invention, the second controller comprises at least one motion sensor and a general purpose processor. The general purpose processor is preferably the central processing unit.

The data from the at least one motion sensor is processed in the general purpose processor to detect a motion and in particular to qualify and to quantify a motion of the second controller and thus of the remote controlled object. The motion detection is preferably based on one or more thresholds, preferably on a threshold for a duration of an acceleration. The general purpose processor also preferably determines extrapolated motion data. This allows determining the motion direction of the RCO.

In a preferred embodiment of the invention, the IMU has an integrated accelerometer and gyroscope. Furthermore, the IMU comprises a Digital Motion Processor, DMP, configured to process the motion data. The DMP is used to detect a motion. To this end a respective threshold for an acceleration and a duration of an acceleration can be set, at which a motion is registered. Furthermore, the DMP provides extrapolated motion data. This allows determining the motion direction of the RCO.

In an embodiment of the invention, the central processing unit 701 further communicates with the energy-subsystem 500, preferably communicates via a **GPIO** interface with the energy-subsystem.

In an embodiment of the invention, the central processing unit 701 further communicates with a transmission-subsystem 800, preferably communicates via an SPI interface with the transmission-subsystem. The transmission subsystem 800 comprises one or more transmitter or transceiver, each with a corresponding antenna. In a preferred embodiment the transmission subsystem comprises a MHz transmitter 801 and a 2.4 GHz transceiver 802.

In an embodiment of the invention, the main electronics module 600 further comprises signal LEDs 630 for indicating various information about the state of the second controller.

In a preferred embodiment the second controller is formed on a printed circuit board.

It is clear to the skilled person that the above described system and method can be implemented differently for different RCOs and different smart devices. The following embodiments provide further details for the implementation.

In embodiments the information stored in the first and second controller may vary according to the implementation. In general, the processing can be either performed on the smart device or in the controller of the second unit. It is preferred that the computationally expensive processing is performed on the smart device and that the transmission hardware specific processing is performed on the second controller.

In embodiments of the invention, the remote control signal may be a single signal but may also be a complex signal, in particular the remote control signal may be a matrix of radio control values.

In embodiments of the invention, the parameters of the heuristic search may comprise one or more of signal type information, i.e. digital or analog; frequency band or channel information, baud rate, modulation, frequency spread method and bit information.

In embodiments of the invention, in particular in embodiments regarding digital remote control signals, the parameter space may be too big for a complete heuristic search. It is preferred to use an adapted search based on known reference commands. In contrast, for analog signals the parameter space is much smaller and within minutes all possible commands can be tested. For the digital signals the combination with known reference commands reduces the process time to a few seconds. After a first command has been matched via a reference command the only unknown parameter is the bit information, which can heuristically be matched much faster.

The embodiments of the above described system and method can alternatively be described based on the users view. The user takes a picture of the RCO with a smart device. The first controller, preferably an app on the smart device, identifies the RCO and performs a database request for suitable remote control information.

The received remote control information is sent from the smart device to the second unit via a standardized communication interface, preferably a WiFi or Bluetooth interface. The second controller generates remote control signals based on the remote control information and/or the remote control commands comprised therein. The second controller sends the remote control signal to the RCO.

In case the RCO moves: The movement is detected by the second unit and the remote control command is verified. The verified command is returned to the smart device, i.e. the first controller. The first controller sends the verified command to the database and extends said database. Thereby, the machine learning system, preferably the neural network, is improved.

In case the RCO does not move: The second controller starts a non-learning heuristic, which performs an educated guess until a movement is detected. The heuristic-matches are returned to the first controller. The first controller sends the verified command to the database and extends said database. Thereby, the machine leaming system, preferably the neural network, is improved. Preferably, the picture recognition is improved. The process is performed for every movement direction, wherein after a successful guess the search is accelerated.

The verification is preferably performed based on the movement directions. However, additionally or alternatively the verification is also performed based on the acceleration, more preferably based on a quality estimate for the movement based on measured acceleration data. This prevents the false verification of quasi-matching remote control commands, which are sometimes observed, preferably in amplitude modulated signals. The signal of such a quasi-match causes the RCO to unevenly move in one direction, e.g. forward, however the movement is not constant and thus the acceleration data allows to discriminate quasi-matches. In a preferred embodiment, the verification is preformed based on an IMU which measures said acceleration data.

As soon as the remote control commands for the RCO are known in the initialization phase, i.e. either by identification of the RCO and/or by the heuristic approach. The commands are stored in the second controller.

Additionally, or alternatively, the user may input a make, model, product name, brand name, or a product-identifier such as a serial number or EAN of the RCO in order to limit the search space. In case the RCO is identified via user input, the corresponding remote control information is received from the database according to the invention and the remote control commands are verified via the method according to the invention.

In the operational phase, the user inputs drive commands to the smart device. The first controller preferably sends said drive commands to the second controller, preferably based on a predetermined format. The second controller generates the corresponding remote control signals based on the users drive commands. It is preferred that in the operational phase no database queries are performed. This has the advantage to avoid an increase of the latency and thereby lessen the user experience.

In an embodiment of the invention, a 3D positioning method and the universal remote control method of are combined. The 3D positioning method is described in detail in the patent application entitled " Method and System for determining a three dimensional Position", i.e. attorney's reference AD2570 EP, filed together with this application, which is herewith incorporated by reference.

The system comprises a smart device with a camera and a second controller. The second controller is connected to the smart device via a standardized interface. The second controller is configured to send remote control signals to a remote controlled object. In a preferred embodiment the second controller is provided in a dongle-type device, which is configured to be attached to a port of the smart device and further configured to send remote control signals to a remote controlled object.

In an initialization phase, the camera of the smart device is used to identify the remote controlled object via a computer vision algorithm. Preferably, the smart device is connected to a database and the computer vision algorithm is a machine leaming algorithm which utilizes data from the database to identify the remote controlled object.

In case the remote controlled object is identified, corresponding remote control information is received from the database and the remote control commands, comprised in the remote control information, are verified via the 3D positioning method.

That is, a remote control command is send from the smart device to the second controller. The second controller generates the corresponding remote control signals and sends the remote control signals to the remote controlled object. Alternatively, the remote control signals are already generated at the smart device and the second controller only receives the remote control signals from the smart device via the standardized interface and transmits the signals to the remote controlled object.

To verify the remote control command the camera of the smart device is used to detect a movement, i.e. to detect a change of position of the remote controlled object. In other words, the camera of the smart device is used as action verification means.

Subsequently a plurality of images are acquired from the camera. Based on the images and based on augmented reality algorithms a 3D map of the space in the image is calculated and one or more planes are identified in the 3D map. The 3D position of the camera within the 3D map is determined based on a positioning unit of the smart device. Additionally or alternatively, a pre-calculated 3D map from a database may be used. Additionally or alternatively the 3D position of the camera within the 3D map is calculated based on the images.

Furthermore, based on the images and computer vision algorithms a plurality of 2D positions of the remote controlled object in the images are determined. Based on each of the 2D positions a corresponding 3D position is calculated.

The respective 3D position is determined as follows: A vector is calculated in the 3D map originating at the position of the camera and pointing towards to the projection of the 2D position of the remote controlled object on a plane in the 3D map. The 3D position is calculated from determining the intersection of said vector with said plane in the 3D map. For each 2D position a 3D position is calculated,

The plurality of 3D positions define a trajectory of the remote controlled object. The trajectory indicates a movement of the remote controlled object. The movement is used to verify the remote control command.

In case the remote controlled object can not be identified, a heuristic search for remote control commands is performed. The same camera based movement verification method is used to identify a movement of the remote controlled object.

In an operational phase, the user inputs drive commands to the smart device. The smart device preferably sends said drive commands to the second controller, preferably based on a predetermined format. The second controller generates the corresponding remote control signals based on the user's drive commands.

Fig. 6 shows a method and system according to an embodiment of the invention. In this embodiment a smart device 100 with an integrated camera is used. The RCO 101 is identified based on a camera input. A second controller 400, without an action verification means, is connected to the smart device 100. Preferably, the second controller 400 is connected to the smart device 100 via a physical interface, i.e. a plug-in or wired connection, more preferably via a USB or Lightning interface.

As described above the second controller 400 is configured to send remote control signals to the RCO 101. The RCO is within the field of view of the camera of the smart device 100. The smart device 100 is configured to detect the movement 208 of the RCO 101 based on a 3D positioning method as described above.

What has been described and illustrated herein are embodiments of the invention along with some of variations. The terms, descriptions and figures used herein are set forth by way of illustration only and are not meant as limitations. Those skilled in the art will recognize that many variations are possible within scope of the invention, which is intended to be defined by the following claims, in which all terms are meant in their broadest reasonable sense unless otherwise indicated.

## Claims

1. System for controlling a movement of a remote controllable self-propelled object, RCO, comprising
a database configured to maintain remote control information regarding at least one RCO, wherein the remote control information comprises at least one remote control command of the RCO;
a remote control signal sending unit configured to send at least one remote control signal comprised in the remote control command to at least one RCO via a remote control interface;
a first controller operationally connected to the database, wherein the first controller is configured to retrieve the remote control information for an RCO from the database; and is configured to send remote control information via a first communication interface to a second controller;
wherein the second controller is operationally connected to the remote control sending unit; and is configured to receive the remote control information from the first controller via the first communication interface; and is configured to send at least one remote control signal based on the remote control information to the RCO via the remote control interface
wherein the system further comprises an identification means configured to identify at least one RCO and an action verification means configured to detect an action of the RCO;
wherein the first controller is operationally connected to the identification means and the second controller is operationally connected to the action verification means;
wherein in an initialization phase the first controller is configured
a) to identify at least one candidate RCO via the identification means;
b) to retrieve the remote control information for the candidate RCO from the database,
c) to send the candidate remote control information or at least one candidate remote control command comprised therein to the second controller, and
wherein in the initialization phase the second controller is configured
d) to send at least one remote control signal based on the candidate remote control command to the RCO via the remote control sending unit.
e) to verify an action of the RCO in response to the candidate remote control command via the action verification means, and
f) preferably to send information regarding a verified action to the first controller,
wherein the action verification means is an inertial measurement unit or a camera of a smart device configured to detect a change of position of the RCO.

2. The System according to claim 1,
wherein in the initialization phase in a heuristic search the second controller is configured to subsequently send all possible remote control signals to the RCO via the remote control sending unit and further configured to verifying an action of the RCO via the action verification means, and preferably to send information regarding a verified action to the first controller.

3. The system according to claim 1 or 2,
further comprising a machine learning system connected to the database and to the first controller, wherein the machine learning system is configured to maintain a trained model for identification of candidate RCOs.

4. The system according to any one of claims 1 to 3,
wherein in an operational phase the first controller is configured
a) to receive a drive command input from a user;
b1) to determine one or more remote control commands corresponding to the drive command and to send the remote control commands to the second controller, or
b2) to send the drive command to the second controller and the second controller is configured to one or more remote control commands corresponding to the drive command; and
wherein in the operational phase the second controller is configured
c) to send at least one remote control signal corresponding to the remote control command to the RCO via the remote control sending unit.

5. The system according to any one of claims 1 to 4, further comprising
a first unit comprising the first controller unit and preferably comprising the identification means; and
a second unit comprising the remote control signal sending unit and preferably comprising the action verification means; and
wherein the first unit and the second unit are connected via the first communication interface and the first communication interface is a standardized communication interface.

6. The system according to claim 5,
wherein the first unit is provided at or integrated in a user device, preferably a smart user device and/or
wherein the second unit is suitable to be provided at or to be integrated in the remote controllable object.

7. The system according to any one of claims 1 to 6,
wherein the remote control signal is a radio control signal; and/or
wherein the standardized communication interface is a WiFi connection or a Bluetooth connection.

8. The system according to any one of claims 1 to 7, wherein the remote controllable object identification means is a camera, preferably an integrated camera of the user device.

9. The system according to any one of claims 1 to 4, further comprising
a first unit comprising the first controller unit, the identification means; and the action verification means; and
a second unit comprising the remote control signal sending unit;
wherein the identification means and the action verification means use images of a camera,
wherein preferably the first unit is formed in a user device, preferably a smart user device, and the camera is a single camera of the smart device, and
wherein the first unit and the second unit are connected via the first communication interface and the first communication interface is a standardized communication interface.

10. Method for use of a system for controlling a remote controllable object according to any one of claims 1 to 9, comprising the steps of:
at the first controller retrieving the remote control information for an RCO from the database; and sending remote control information via a first communication interface to the second controller;
at the second controller receiving the remote control information from the first controller via the first communication interface; and sending at least one remote control signal based on the remote control information to the RCO via the remote control interface.
further comprising in an initialization phase the steps of
at the first controller
a) identifying at least one candidate RCO via the identification means;
b) retrieving the remote control information for the candidate RCO from the database,
c) sending the candidate remote control information or at least one candidate remote control command comprised therein to the second controller, and
in the initialization phase at the second controller
d) sending at least one remote control signal based on the candidate remote control command to the RCO via the remote control sending unit.
e) verifying an action of the RCO in response to the candidate remote control command via the action verification means, and
f) preferably sending information regarding a verified action to the first controller,
wherein the action verification means is an inertial measurement unit or a camera of a smart device configured to detect a change of position of the RCO.

11. The method according to claim 10,
further comprising the steps of: in an operational phase at the first controller
a) receiving a drive command input from a user;
b1) determining one or more remote control commands corresponding to the drive command and to send the remote control commands to the second controller, or
b2) sending the drive command to the second controller and the second controller is configured to one or more remote control commands corresponding to the drive command; and
in the operational phase at the second controller
c) to sending at least one remote control signal corresponding to the remote control command to the RCO via the remote control sending unit.

12. A computer program product comprising instructions to cause a first controller to execute the steps of the method of claim 10 or 11 and/or to cause a second controller to execute the steps of the method of claim 10 or 11.

13. A computer-readable medium having stored thereon the computer program of claim 12.

## Patentansprüche

1. System zur Steuerung einer Bewegung eines fernsteuerbaren, selbstfahrenden Objekts, RCO, umfassend:
eine Datenbank, die dazu ausgelegt ist, Fernsteuerungsinformationen in Bezug auf zumindest ein RCO zu hinterlegen, wobei die Fernsteuerungsinformationen zumindest einen Fernsteuerungsbefehl für das RCO enthalten;
eine Fernsteuerungssignal-Sendeeinheit, die dazu ausgelegt ist, zumindest ein Fernsteuerungssignal, das in dem Fernsteuerungsbefehl enthalten ist, über eine Fernsteuerungsschnittstelle an zumindest ein RCO zu senden;
eine erste Steuereinheit, die betriebsmäßig mit der Datenbank verbunden ist, wobei die erste Steuereinheit dazu ausgelegt ist, die Fernsteuerungsinformationen für ein RCO aus der Datenbank abzurufen; und die dazu ausgelegt ist, Fernsteuerungsinformationen über eine erste Kommunikationsschnittstelle an eine zweite Steuereinheit zu senden;
wobei die zweite Steuereinheit betriebsmäßig mit der Fernsteuerungssendeeinheit verbunden und dazu ausgelegt ist, die Fernsteuerungsinformationen von der ersten Steuereinheit über die erste Kommunikationsschnittstelle zu empfangen, und dazu ausgelegt ist, zumindest ein Fernsteuerungssignal auf der Grundlage der Fernsteuerungsinformationen über die Fernsteuerungsschnittstelle an das RCO zu senden,
wobei das System ferner eine Identifizierungseinrichtung zum Identifizieren zumindest eines RCO und eine Aktionsüberprüfungseinrichtung zum Erkennen einer Aktion des RCO umfasst;
wobei die erste Steuereinheit betriebsmäßig mit der Identifizierungseinrichtung verbunden ist und die zweite Steuereinheit betriebsmäßig mit der Aktionsüberprüfungseinrichtung verbunden ist;
wobei in einer Initialisierungsphase die erste Steuereinheit dazu ausgelegt ist,
a) zumindest einen RCO-Kandidaten über die Identifizierungseinrichtung zu identifizieren;
b) die Fernsteuerungsinformationen für den RCO-Kandidaten aus der Datenbank abzurufen,
c) die Kandidaten-Fernsteuerungsinformationen oder zumindest einen darin enthaltenen Kandidaten-Fernsteuerungsbefehl an die zweite Steuereinheit zu senden; und
wobei in der Initialisierungsphase die zweite Steuereinheit dazu ausgelegt ist,
d) zumindest ein Fernsteuerungssignal auf der Grundlage des Kandidaten-Fernsteuerungsbefehls über die Fernsteuerungssendeeinheit an das RCO zu senden,
e) eine Aktion des RCO als Reaktion auf den Kandidaten-Fernsteuerungsbefehl über die Aktionsüberprüfungseinrichtung zu überprüfen, und
f) vorzugsweise Informationen über eine überprüfte Aktion an die erste Steuereinheit zu senden,
wobei es sich bei der Aktionsüberprüfungseinrichtung um eine Trägheitsmesseinheit oder eine Kamera eines intelligenten Geräts zum Erkennen einer Positionsänderung des RCO handelt.

2. System nach Anspruch 1,
wobei die zweite Steuereinheit in der Initialisierungsphase bei einer heuristischen Suche dazu ausgelegt ist, in der Folge alle möglichen Fernsteuerungssignale über die Fernsteuerungssendeeinheit an das RCO zu senden, und ferner dazu ausgelegt ist, eine Aktion des RCO über die Aktionsüberprüfungseinrichtung zu überprüfen und vorzugsweise Informationen über eine überprüfte Aktion an die erste Steuereinheit zu senden.

3. System nach Anspruch 1 oder 2,
ferner umfassend ein maschinelles Lernsystem, das mit der Datenbank und der ersten Steuereinheit verbunden ist, wobei das maschinelle Lernsystem dazu ausgelegt ist, ein trainiertes Modell zur Identifizierung von RCO-Kandidaten zu hinterlegen.

4. System nach einem der Ansprüche 1 bis 3,
wobei in einer Betriebsphase die erste Steuereinheit dazu ausgelegt ist,
a) eine Fahrbefehlseingabe von einem Benutzer zu empfangen;
b1) einen oder mehrere Fernsteuerungsbefehle zu ermitteln, die dem Fahrbefehl entsprechen, und die Fernsteuerungsbefehle an die zweite Steuereinheit zu senden, oder
b2) den Fahrbefehl an die zweite Steuereinheit zu senden, wobei die zweite Steuereinheit dazu ausgelegt ist, einen oder mehrere Fernsteuerungsbefehle, die dem Fahrbefehl entsprechen, zu ermitteln; und
wobei in der Betriebsphase die zweite Steuereinheit dazu ausgelegt ist,
c) zumindest ein dem Fernsteuerungsbefehl entsprechendes Fernsteuerungssignal über die Fernsteuerungssendeeinheit an das RCO zu senden.

5. System nach einem der Ansprüche 1 bis 4, ferner umfassend:
eine erste Einheit, die die erste Steuereinheit und vorzugsweise die Identifizierungseinrichtung umfasst; und
eine zweite Einheit, die die Fernsteuerungssignal-Sendeeinheit und vorzugsweise die Aktionsüberprüfungseinrichtung umfasst; und
wobei die erste Einheit und die zweite Einheit über die erste Kommunikationsschnittstelle verbunden sind und die erste Kommunikationsschnittstelle eine standardisierte Kommunikationsschnittstelle ist.

6. System nach Anspruch 5,
wobei die erste Einheit an einem Benutzergerät, vorzugsweise einem intelligenten Benutzergerät, vorgesehen oder darin integriert ist, und/oder
wobei die zweite Einheit dazu geeignet ist, an dem fernsteuerbaren Objekt vorgesehen oder in dieses integriert zu werden.

7. System nach einem der Ansprüche 1 bis 6,
wobei es sich bei dem Fernsteuerungssignal um ein Funksteuerungssignal handelt; und/oder
wobei es sich bei der standardisierten Kommunikationsschnittstelle um eine WiFi-Verbindung oder eine Bluetooth-Verbindung handelt.

8. System nach einem der Ansprüche 1 bis 7, wobei die Identifizierungseinrichtung für das fernsteuerbare Objekt eine Kamera ist, vorzugsweise eine integrierte Kamera des Benutzergeräts.

9. System nach einem der Ansprüche 1 bis 4, ferner umfassend:
eine erste Einheit, die die erste Steuereinheit, die Identifizierungseinrichtung und die Aktionsüberprüfungseinrichtung umfasst; und
eine zweite Einheit, die die Fernsteuerungssignal-Sendeeinheit umfasst;
wobei die Identifizierungseinrichtung und die Aktionsüberprüfungseinrichtung Bilder einer Kamera verwenden,
wobei vorzugsweise die erste Einheit in einem Benutzergerät, vorzugsweise einem intelligenten Benutzergerät, ausgebildet ist und die Kamera eine einzelne Kamera des intelligenten Geräts ist, und
wobei die erste Einheit und die zweite Einheit über die erste Kommunikationsschnittstelle verbunden sind und die erste Kommunikationsschnittstelle eine standardisierte Kommunikationsschnittstelle ist.

10. Verfahren zur Verwendung eines Systems zur Steuerung eines fernsteuerbaren Objekts nach einem der Ansprüche 1 bis 9, umfassend die folgenden Schritte:
an der ersten Steuereinheit Abrufen der Fernsteuerungsinformationen für ein RCO aus der Datenbank; und Senden von Fernsteuerungsinformationen über eine erste Kommunikationsschnittstelle an die zweite Steuereinheit;
an der zweiten Steuereinheit Empfangen der Fernsteuerungsinformationen von der ersten Steuereinheit über die erste Kommunikationsschnittstelle; und
Senden zumindest eines Fernsteuerungssignals auf der Grundlage der Fernsteuerungsinformationen über die Fernsteuerungsschnittstelle an das RCO,
ferner umfassend in einer Initialisierungsphase die folgenden Schritte:
an der ersten Steuereinheit
a) Identifizieren zumindest eines RCO-Kandidaten über die Identifizierungseinrichtung,
b) Abrufen der Fernsteuerungsinformationen für den RCO-Kandidaten aus der Datenbank,
c) Senden der Kandidaten-Fernsteuerungsinformationen oder zumindest eines darin enthaltenen Kandidaten-Fernsteuerungsbefehls an die zweite Steuereinheit; und
in der Initialisierungsphase an der zweiten Steuereinheit
d) Senden zumindest eines Fernsteuerungssignals auf der Grundlage des Kandidaten-Fernsteuerungsbefehls über die Fernsteuerungssendeeinheit an das RCO,
e) Überprüfen einer Aktion des RCO als Reaktion auf den Kandidaten-Fernsteuerungsbefehl über die Aktionsüberprüfungseinrichtung, und
f) vorzugsweise Senden von Informationen über eine überprüfte Aktion an die erste Steuereinheit,
wobei es sich bei der Aktionsüberprüfungseinrichtung um eine Trägheitsmesseinheit oder eine Kamera eines intelligenten Geräts zum Erkennen einer Positionsänderung des RCO handelt.

11. Verfahren nach Anspruch 10,
ferner umfassend die folgenden Schritte:
in einer Betriebsphase an der ersten Steuereinheit
a) Empfangen einer Fahrbefehlseingabe von einem Benutzer,
b1) Ermitteln eines oder mehrerer Fernsteuerungsbefehle, die dem Fahrbefehl entsprechen, und Senden der Fernsteuerungsbefehle an die zweite Steuereinheit, oder
b2) Senden des Fahrbefehls an die zweite Steuereinheit, wobei die zweite Steuereinheit dazu ausgelegt ist, einen oder mehrere Fernsteuerungsbefehle, die dem Fahrbefehl entsprechen, zu ermitteln; und
in der Betriebsphase an der zweiten Steuereinheit
c) Senden zumindest eines dem Fernsteuerungsbefehl entsprechenden Fernsteuerungssignals über die Fernsteuerungssendeeinheit an das RCO.

12. Computerprogrammprodukt, das Anweisungen umfasst, um eine erste Steuereinheit zu veranlassen, die Schritte des Verfahrens nach Anspruch 10 oder 11 auszuführen, und/oder um eine zweite Steuereinheit zu veranlassen, die Schritte des Verfahrens nach Anspruch 10 oder 11 auszuführen.

13. Computerlesbares Medium, auf dem das Computerprogramm nach Anspruch 12 abgespeichert ist.

## Revendications

1. Système de commande d'un déplacement d'un objet automotrice télécommandé, RCO comprenant
une base de données configurée pour conserver des informations de commande à distance concernant au moins un RCO, dans lequel les informations de commande à distance comprennent au moins un ordre de commande à distance du RCO ;
une unité d'envoi de signal de commande à distance configurée pour envoyer au moins un signal de commande à distance compris dans l'ordre de commande à distance à au moins un RCO par l'intermédiaire d'une interface de commande à distance ;
un premier dispositif de commande relié de manière opérationnelle à la base de données, dans lequel le premier dispositif de commande est configuré pour récupérer les informations de commande à distance pour un RCO à partir de la base de données ; et est configuré pour envoyer des informations de commande à distance par l'intermédiaire d'une première interface de communication à un deuxième dispositif de commande ;
dans lequel le deuxième dispositif de commande est connecté de manière opérationnelle à l'unité d'envoi de commande à distance ; et est configuré pour recevoir les informations de commande à distance du premier dispositif de commande par l'intermédiaire de la première interface de communication ; et est configuré pour envoyer au moins un signal de commande à distance basé sur les informations de commande à distance au RCO par l'intermédiaire de l'interface de commande à distance,
dans lequel le système comprend en outre un moyen d'identification configuré pour identifier au moins un RCO et un moyen de vérification d'action configuré pour détecter une action du RCO ;
dans lequel le premier dispositif de commande est connecté de manière opérationnelle au moyen d'identification et le deuxième dispositif de commande est connecté de manière opérationnelle au moyen de vérification d'action ;
dans lequel dans une phase d'initialisation le premier dispositif de commande est configuré
a) pour identifier au moins un RCO candidat par l'intermédiaire du moyen d'identification ;
b) pour récupérer les informations de commande à distance pour le RCO candidat de la base de données,
c) pour envoyer les informations de commande à distance de candidat ou au moins un ordre de commande à distance de candidat qu'elles comprennent au deuxième dispositif de commande, et
dans lequel, dans la phase d'initialisation, le deuxième dispositif de commande est configuré
d) pour envoyer au moins un signal de commande à distance basé sur l'ordre de commande à distance de candidat au RCO par l'intermédiaire de l'unité d'envoi de commande à distance,
e) pour vérifier une action du RCO en réponse à l'ordre de commande à distance de candidat par l'intermédiaire du moyen de vérification d'action, et
f) de préférence pour envoyer des informations concernant une action vérifiée au premier dispositif de commande,
dans lequel le moyen de vérification d'action est une unité de mesure d'inertie ou une caméra d'un dispositif intelligent configuré pour détecter un changement de position du RCO.

2. Système selon la revendication 1,
dans lequel, dans la phase d'initialisation d'une recherche heuristique, le deuxième dispositif de commande est configuré pour envoyer ultérieurement tous les signaux de commande à distance possibles au RCO par l'intermédiaire de l'unité d'envoi de commande à distance et est configuré en outre pour vérifier une action du RCO par l'intermédiaire du moyen de vérification d'action, et de préférence pour envoyer des informations concernant une action vérifiée au premier dispositif de commande.

3. Système selon la revendication 1 ou 2,
comprenant en outre un système d'apprentissage automatique connecté à la base de données et au premier dispositif de commande, dans lequel le système d'apprentissage automatique est configuré pour maintenir un modèle entraîné pour l'identification de RCO candidats.

4. Système selon l'une quelconque des revendications 1 à 3,
dans lequel, dans une phase opérationnelle, le premier dispositif de commande est configuré
a) pour recevoir un ordre d'entraînement entré par un utilisateur ;
b1) pour déterminer un ou plusieurs ordres de commande à distance correspondant à l'ordre d'entraînement et pour envoyer les ordres de commande à distance au deuxième dispositif de commande, ou
b2) pour envoyer l'ordre d'entraînement au deuxième dispositif de commande et le deuxième dispositif de commande est configuré sur un ou plusieurs ordres de commande à distance correspondant à l'ordre d'entraînement ; et
dans lequel, dans la phase opérationnelle, le deuxième dispositif de commande est configuré
c) pour envoyer au moins un signal de commande à distance correspondant à la commande de commande à distance au RCO par l'intermédiaire de l'unité d'envoi de commande à distance.

5. Système selon l'une quelconque des revendications 1 à 4, comprenant en outre
une première unité comprenant la première unité de dispositif de commande et comprenant de préférence le moyen d'identification ; et
une deuxième unité comprenant l'unité d'envoi de signal de commande à distance et comprenant de préférence le moyen de vérification d'action ; et
dans lequel la première unité et la deuxième unité sont connectées par l'intermédiaire de la première interface de communication et la première interface de communication est une interface de communication standardisée.

6. Système selon la revendication 5,
dans lequel la première unité est prévue sur ou intégrée dans un dispositif utilisateur, de préférence un dispositif utilisateur intelligent et/ou
dans lequel la deuxième unité est adaptée pour être prévue sur ou être intégrée dans l'objet pouvant être commandé à distance.

7. Système selon l'une quelconque des revendications 1 à 6,
dans lequel le signal de commande à distance est un signal de commande radio ; et/ou
dans lequel l'interface de communication standardisée est une connexion WiFi ou une connexion Bluetooth.

8. Système selon l'une quelconque des revendications 1 à 7, dans lequel le moyen d'identification d'objet pouvant être commandé à distance est une caméra, de préférence une caméra intégrée du dispositif utilisateur.

9. Système selon l'une quelconque des revendications 1 à 4, comprenant en outre
une première unité comprenant la première unité de dispositif de commande, le moyen d'identification et le moyen de vérification d'action ; et
une deuxième unité comprenant l'unité d'envoi de signal de commande à distance ;
dans lequel le moyen d'identification et le moyen de vérification d'action utilisent des images d'une caméra,
dans lequel de préférence la première unité est formée dans un dispositif utilisateur, de préférence un dispositif utilisateur intelligent, et la caméra est une caméra unique du dispositif intelligent, et
dans lequel la première unité et la deuxième unité sont connectées par l'intermédiaire de la première interface de communication et la première interface de communication est une interface de communication standardisée.

10. Procédé d'utilisation d'un système de commande d'un objet pouvant être commandé à distance selon l'une quelconque des revendications 1 à 9, comprenant les étapes :
sur le premier dispositif de commande, de récupération des informations de commande à distance pour un RCO de la base de données ; et d'envoi d'informations de commande à distance par l'intermédiaire d'une première interface de communication au deuxième dispositif de commande ;
sur le deuxième dispositif de commande, de réception des informations de commande à distance du premier dispositif de commande par l'intermédiaire de la première interface de communication ; et d'envoi d'au moins un signal de commande à distance basé sur les informations de commande à distance au RCO par l'intermédiaire de l'interface de commande à distance,
comprenant en outre, dans une phase d'initialisation, les étapes, sur le premier dispositif de commande,
a) d'identification d'au moins un RCO candidat par l'intermédiaire du moyen d'identification ;
b) de récupération des informations de commande à distance pour le RCO candidat de la base de données,
c) d'envoi des informations de commande à distance candidates ou d'au moins un ordre de commande à distance candidat qu'elles contiennent au deuxième dispositif de commande, et
dans la phase d'initialisation sur le deuxième dispositif de commande
d) d'envoi d'au moins un signal de commande à distance basé sur l'ordre de commande à distance candidat au RCO par l'intermédiaire de l'unité d'envoi de commande à distance,
e) de vérification d'une action du RCO en réponse à l'ordre de commande à distance candidat par l'intermédiaire du moyen de vérification d'action, et
f) de préférence d'envoi d'informations concernant une action vérifiée au premier dispositif de commande,
dans lequel le moyen de vérification d'action est une unité de mesure d'inertie ou une caméra d'un dispositif intelligent configuré pour détecter un changement de position du RCO.

11. Procédé selon la revendication 10,
comprenant en outre les étapes : dans une phase opérationnelle sur le premier dispositif de commande
a) de réception d'une entrée d'ordre d'entraînement d'un utilisateur :
b1) de détermination d'un ou plusieurs ordres de commande à distance correspondant à l'ordre d'entraînement et d'envoi des ordres de commande à distance au deuxième dispositif de commande, ou
b2) d'envoi de l'ordre d'entraînement au deuxième dispositif de commande et le deuxième dispositif de commande est configuré pour un ou plusieurs ordres de commande à distance correspondant à l'ordre d'entraînement ; et
dans la phase opérationnelle sur le deuxième dispositif de commande
c) d'envoi d'au moins un signal de commande à distance correspondant à l'ordre de commande à distance au RCO par l'intermédiaire de l'unité d'envoi de commande à distance.

12. Produit de programme informatique comprenant des instructions pour amener un premier dispositif de commande à exécuter les étapes du procédé selon l'une quelconque des revendications 10 à 11 et/ou pour amener un deuxième dispositif de commande à exécuter les étapes du procédé selon l'une quelconque des revendications 10 ou 11.

13. Support lisible par ordinateur présentant le programme informatique selon la revendication 12 qui est stocké dans celui-ci.
